# EUROPEAN PATENT SPECIFICATION

(11) **EP 1 912 778 B1**
(45) Date of publication and mention of the grant of the patent: **15.09.2010**
(21) Application number: 06747610.1
(22) Date of filing: 05.07.2006
(51) Int. Cl.: B29C 51/28, B29C 70/44, B29C 70/54

(54) **METHOD AND DEVICE FOR MANUFACTURING A MOULDING FROM A PLASTIC**
VERFAHREN UND VORRICHTUNG ZUR HERSTELLUNG EINES FORMTEILS AUS KUNSTSTOFF
PROCEDE ET DISPOSITIF DE FABRICATION D'UN OBJET MOULE EN PLASTIQUE

(30) Priority: 08.07.2005 NL 1029471
(43) Date of publication of application: 23.04.2008
(73) Proprietor: Gelato Corporation NV, Curaçao (AN)
(72) Inventor: ENNEKING, Henri, Paul, Maria, Quirinus, B-2382 Poppel (BE); BACKER, Jan, Adolph, Dam, NL-5694 WN Son & Breugel (NL)
(74) Representative: Brouwer, Hendrik Rogier
(86) International application number: PCT/NL2006/050165
(87) International publication number: WO 2007/043876

(56) References cited:
- EP-A- 0 410 599
- WO-A-99/25515
- GB-A- 940 407
- CLERICO M ET AL: "TECHNOLOGIE DI FORMATURA DI COMPOSITI A MATRICE TERMOPLASTICA" INTERPLASTICS, TECHNIQUE NUOVE. MILAN, IT, vol. 16, no. 3, May 1993 (1993-05), pages 76-81, XP000382381 ISSN: 0392-3800

## Description

The invention relates to a method for manufacturing a moulding from a plastic, preferably a fibre-reinforced plastic. The invention also relates to a device for manufacturing the moulding. Finally, the invention relates to a heatable membrane applicable in the method and device according to the invention.

In usual methods for manufacturing mouldings from plastics, and in particular from fibre-reinforced plastics, the plastic is generally brought to a first temperature at which it is easy to deform, and subsequently brought to a second temperature to impart stability to the moulding. For the manufacture of a moulding from a thermoplastic polymer this latter is for instance first melted to above its melting temperature, at which the polymer can be shaped, after which moulding process the polymer is cooled to for instance room temperature, this giving the moulding its stability. A known method comprises for instance vacuum-forming, wherein a number of plastic layers are arranged on each other in a so-called stack or laminate, which is made deformable by heating. By means of applying vacuum on one side the heated laminate is then drawn against the surface of a relatively cool mould, wherein the thermoplastic laminate, after cooling thereof, retains the shape into which it was formed during the deformable phase. Despite frequent refinements of the known method, vacuum pumping as well as other related methods, such as for instance diaphragm-forming or rubber pressing, are still capable of improvement. For good mechanical properties, among others, it is indeed desirable that the different layers of the laminate are well connected to each other in the moulding, i.e. form a consolidated whole. This good bonding in the moulding is generally ensured by consolidating the different layers under pressure and at increased temperature during the shaping. The foregoing is all the more applicable in the case of fibre-reinforced plastics wherein, in addition to the desired consolidation of the different layers, a good impregnation of the reinforcing fibres with the thermoplastic polymer is also important. It will be apparent that the method of heating the plastic is of great importance here.

EP 0 410 599 A describes a method for manufacturing a moulding from a fibre reinforced plastic. In the disclosed method, a laminate of stacked layers is arranged between two membranes. The whole assembly is heated and then formed under pressure by thermoforming. A similar method is described in an article of Clerico et al. "Tecnologie di formatura di composite a matrice termoplastica", in Interplastics 16 (1993). The article describes a thermoforming method for shaping thermoplastic composites between two membranes in an autoclave. It is clear from figure 10 that the whole internal volume of the autoclave is heated with a hot gas (nitrogen or air) to heat up the laminate.

At the moment heating of thermoplastic polymers takes place in different ways. It is thus usual to heat thermoplastic polymers by means of contact plates or contact moulds brought to temperature, or to heat them in an oven with circulation of heated air or another gas. It is also possible to apply energy-rich radiation sources, such as for instance infrared radiation (IR). Presses or injection screws are for instance usually applied to generate pressure. A pressure means also much applied is an autoclave, which substantially comprises a combination of an oven and a pressure vessel. The laminate to be shaped is draped on a mould, whereafter the whole is placed in the autoclave. The autoclave is then heated by being filled with heated air. Consolidation of the laminate is obtained by holding the air in the autoclave, whereby the pressure therein increases.

The above described known methods have the drawback that they are time-consuming and therefore unsuitable for large-scale production. The (too long) cycle time associated with the different steps of heating, mutually adhering the layers and forming into a moulding depends primarily here on the time required to heat and subsequently re-cool the plastic.

The present invention has for its object to provide a more efficient method for manufacturing a moulding from a plastic, wherein the moulding moreover displays good mechanical properties.

The method according to the invention for manufacturing a moulding from a plastic, and in particular a fibre-reinforced plastic, is characterized for this purpose in that it comprises at least the steps of stacking at least one plastic layer to form a laminate; enclosing the laminate between at least two membranes, at least one of which comprises integrated heating; bringing the thus formed assembly to a first temperature by heating the at least one membrane with the integrated heating; and forming the assembly by making use of a shaping tool brought to a second temperature.

Arranging the stacked laminate of preferably a number of fibre-reinforced plastic layers between at least two membranes and subsequently heating at least one of these membranes with an integrated heating achieves that the heating of the laminate can take place much more efficiently than is the case in the known method. It is after all only the laminate itself which is heated where in for instance the known autoclave method the whole internal space of the autoclave has to be brought to the desired first temperature. During rubber pressing on the other hand, the heating of the laminate generally takes place in an oven disposed separately of the press, wherein the heated laminate must therefore be transferred to the press. The method according to the invention does not have this drawback. A further advantage of the method according to the invention is that it requires only little energy, since only those parts of a device suitable for the method are heated which are necessary to make the plastic deformable. Due to the relatively small mass of the heatable membranes it also becomes possible with the method according to the invention to achieve a very rapid heating if this is desired. It is thus possible for instance to bring the membrane within several seconds to a temperature of 200°C and higher.

The method according to the invention makes use of a heatable membrane developed specifically thereto. The heatable membrane according to the invention, which can preferably be applied for the manufacture of mouldings from fibre-reinforced plastic by means of a shaping tool suitable for this purpose, is characterized in that the membrane comprises heating elements. A particular embodiment comprises a membrane comprising metal wire as heating element, which can subsequently be heated to the desired temperature by means of supplying current. The strength of the current fed through the wire and the resistance of the metal wire here substantially determine the heat developed.

In a preferred embodiment of the heatable membrane the heating elements comprise a metal wire wound around a core wire. The metal wire is here preferably a very thin metal wire, i.e. it has an average diameter of less than 0.15 mm. A long running length of the wire is obtained by winding or twining the metal wire in a spiral round the core wire. In this way the metal wire length typically becomes 1.5 to 12 times longer than the core wire length, whereby the heating element becomes very stretchable and elastic. It hereby becomes possible to manufacture mouldings of complicated shape. The core wire applied in the heating element can consist of different materials. It is however advantageous to choose a material herefor which is relatively simple to remove. Particularly suitable materials for the core wire can for instance be chosen from the following polymers, without however being limited thereto: polyvinyl alcohol (PVA) wire, because this wire is relatively easy to remove by dissolving thereof in preferably hot water. The spiral metal wire remains after removal of the core wire, whereafter it can be embedded or encapsulated in a suitable elastomer matrix; elastic fibres such as for instance Lycra or XLA elastic fibre from Dow Chemical, or another already elastic twined thread; elastic rubber rope, rubber cord or rubber hose, wherein this preferably takes a very thin form (characteristic dimension preferably between 0.5 mm and 3 mm); particularly suitable is a silicone cord with a diameter of about 0.7 -1.0 mm; a meltable polymer thread which melts or at least softens when the metal wire is heated by an electrical current and can thus no longer withstand stretching. A suitable example of such a polymer thread is for instance the polyamide fibre "Grilon" from EMS Chemie; a thread easily soluble in a solvent other than water wherein, as described above, after twining and subsequent weaving it is nevertheless dissolved and removed prior to the encapsulation in an elastomer matrix.

In another preferred embodiment of the heatable membrane according to the invention the heating elements comprise a woven fabric of metal wires wound around a core wire. The woven fabric can for instance be obtained by weaving the core wire with metal wire wrapped therearound, wherein metal wires, for instance copper wire, are provided on both outer edges to enable a good and reliable electrical contact to be made with the current source.

The heatable membrane can be obtained according to the invention by embedding this woven fabric, the weft of which preferably comprises the spirally wound metal wire, in a heat-resistant elastic matrix, for instance a natural rubber or an elastomer, preferably silicone rubber. It is advantageous to choose the stretched length (after stretching of the spiral) of the twined metal wire significantly longer than the anticipated length of the membrane in deformed state (the length of the membrane after stretching thereof in the shaping process). This achieves that the wire, and thus the heating element, remains at all times intact and functional as heating wire. In order to enable a uniform heating of the membrane the woven fabric preferably has more than three threads per centimetre in the weft direction. It is also possible to arrange the elastic, electrically heatable wire in the longitudinal direction of the woven fabric, the so-called warp direction. This may possibly be desirable to enable a better distribution of the electrical resistance over the membrane and/or because the element, due to the desired final form of the moulding, must for instance be very long and narrow and/or must have a different elasticity.

In addition to the above stated methods for manufacturing the heatable membrane, it is also possible to incorporate into the woven fabric, and subsequently into the membrane, an electrically conductive elastic core wire, for instance metal or carbon-filled silicone rubber compound extruded into rope, strip or cord. It is also possible to process this "compound" directly into rolled or calendered foil and/or sheets so as in this way to achieve a determined, defined electrical resistance.

Although it is apparent from the above that the invention is not limited to heatable membranes with determined mechanical properties, the heatable membrane preferably has elastic properties. In the context of this application elastic properties are understood to mean that the membrane is easily stretchable. A preferred membrane according to the invention thus preferably has an elongation at break of at least 100%, more preferably at least 200% and most preferably at least 400%. As described above, this elasticity can be obtained by a suitable choice of the matrix of the membrane and/or of the heating elements combined therewith and/or embedded therein.

The method according to the invention preferably makes use of at least two membranes. In a preferred embodiment of the method according to the invention a vacuum pressure is applied between the at least two membranes after receiving the laminate therebetween. By applying an at least a partial vacuum the contact between the laminate and the heatable membranes located on either side thereof is improved, whereby the heat transfer from membrane to laminate progresses more easily. The laminate is also held well in place by the vacuum, which is important in the deforming of the moulding in the shaping tool. For the same reasons it is advantageous that an overpressure is applied to the outside of the assembly of laminate and membranes.

For forming into the desired moulding the stack can be pressed into a female mould part using a male mould half of metal or rubber. This deforming can take place without a clamping frame being applied. During deformation by stretching the edges of the stack are at least partially clamped by the clamping frame and/or by mould parts provided for this purpose. Another possible deforming step is diaphragm-forming, wherein the stack is enveloped by foil layers which are then clamped along the edges. This has the advantage that the stack itself can shift relatively easily during the shaping. The shaping takes place by decreasing or increasing the air pressure on one side of the stack. A variant consists of applying a liquid instead of air. The foil (the "diaphragm") can here be manufactured from plastic. It is also possible to use a thin metal foil herefor. The method according to the invention is preferably characterized in that the shaping tool comprises a mould and that the assembly heated to the first temperature is held under pressure for a suitable time against the mould surface. In a particularly advantageous embodiment the shaping tool also comprises an autoclave in which the mould is accommodated, and the assembly is held under pressure against the mould surface by at least partially discharging the air situated between the assembly and the mould surface. This can for instance take place by providing at least one valve in the wall of the autoclave at the position of the space between assembly and mould surface, through which valve the air can escape to the outside.

The method according to the invention can in principle be applied for the manufacture of mouldings of any random plastic. It is however advantageous to characterize the method in that at least one of the plastic layers comprises a libre-reinforced thermoplastic polymer. Examples of thermoplastic polymers suitable for the method according to the invention are polyamides, polyimides, polyethersulphones, polyetheretherketone, polyurethanes, polyethylene, polypropylene, polyphenylene sulphides, polyamide-imides, acrylonitrile butadiene-styrene (ABS), styrene maleic anhydride (SMA), polycarbonate, polyphenylene oxide blend (PPO), thermoplastic polyesters such as polyethylene terephthalate, polybutylene terephthalate, and blends and copolymers of one or more of the above stated polymers. If a fibre-reinforced thermoplastic polymer is used, it is then advantageous that in the method the first temperature is higher than the glass transition temperature of the thermoplastic polymer or higher than the lowest glass transition temperature in the case a plurality of thermoplastic polymers are applied. When semicrystalline thermoplastic polymers are used, the first temperature is preferably higher than the melting temperature of the thermoplastic polymer or higher than the lowest melting temperature in the case a plurality of thermoplastic polymers are applied. Due to the above stated choice of the first temperature a good impregnation of the reinforcing fibres with the plastic is obtained in a suitably short time. Furthermore, the layers of the laminate are well consolidated. In order to further improve this consolidation it is advantageous that the second temperature is lower than the glass transition temperature of the thermoplastic polymer or lower than the lowest glass transition temperature in the case a plurality of thermoplastic polymers are applied.

If desired, the method according to the invention can also be applied to form a laminate of which at least one of the plastic layers comprises a fibre-reinforced thermosetting polymer. In such a case the first temperature will preferably be higher than the curing temperature of the thermosetting polymer or higher than the lowest curing temperature in the case a plurality of thermosetting polymers are applied. The second temperature is in this case preferably lower than the glass transition temperature of the thermosetting polymer or lower than the lowest glass transition temperature in the case a plurality of thermosetting polymers are applied.

When reference is made in this application to a first and a second temperature, this is understood to mean an average temperature. It will be apparent that when reference is for instance made to bringing the laminate to a first temperature, this is understood to mean that the laminate has on average reached the first temperature, wherein local variations can occur. The same applies for the method step wherein the shaping tool is at a second temperature. Here too it is possible for another temperature to prevail locally, although this will not vary much from the average second temperature.

Suitable reinforcing fibres are for instance glass fibres, carbon fibres, metal fibres, reinforced thermoplastic polymer fibres, such as for instance aramid fibres and ultrahigh molecular weight polyethylene or polypropylene fibres, in addition to natural fibres such as for instance flax, wood and hemp fibres. In another embodiment the thermoplastic polymer layer comprises woven fabrics of pre-oriented thermoplastic polymers, such as for instance polypropylene, polyethylene, polyamides, polyethylene terephthalate and/or polybutylene terephthalate. Such products of polypropylene are commercially available from, among others, Propex under the brand name Curv and from the firm Lankhorst Indutech under the brand name Pure.

The fibre-reinforced plastic layer preferably comprises substantially continuous fibres extending in a minimum of two practically orthogonal directions (so-called isotopic fabric). In another preferred embodiment the fibre layer and/or the fibre-reinforced plastic layer comprises substantially continuous fibres extending substantially in one direction (so-called UD fabric). The specific choice of the type of woven fabric depends on, among other factors, the desired mechanical properties and the deformability of the fabric. The selected embodiment of the method according to the invention can also be significant here.

The invention also relates to a device for manufacturing a moulding from a plastic, preferably a fibre-reinforced plastic, which device comprises at least enclosing means for enclosing a laminate of at least one plastic layer between at least two membranes; and further first heating means comprising heating elements arranged in at least one membrane for bringing the at least one membrane to a first temperature; a shaping tool for deforming the laminate; and pressure means enabling the assembly of laminate and at least two membranes to be held under pressure.

Further particular embodiments of the device according to the invention are described in claims 15-18.

In a typical embodiment the first heating means for bringing at least one membrane to a first temperature comprise an electric current generator, the shaping tool for deforming the laminate comprises a mould on which the laminate can be placed, and the pressure means enabling the assembly of laminate and at least two membranes to be held under pressure comprises a pressure vessel or autoclave.

The first heating means can for instance comprise electrical heating means to which the heating elements of the membrane can be connected and which can generate an electric current. The first heating means can however also comprise other means, such as for instance a radiation source such as for instance a microwave oven accommodated in the pressure vessel. Such a radiation source then acts to heat a membrane together with electrically conductive filling materials received in the membrane.

In a preferred embodiment the device also comprises second heating means for bringing the shaping tool to a second temperature. These second heating means can for instance comprise a pump circuit which can guide a suitable heat-exchanging liquid such as for instance water or oil through the mould. In a preferred embodiment of the device the second heating means can however also comprise cooling means. In the context of this application the term heating must therefore be broadly interpreted as also being able to include cooling. In the case for instance a moulding is manufactured from fibre-reinforced thermoplastic polymer, the second temperature will generally be low, preferably about room temperature, and more preferably even below room temperature. This further enhances the speed of the method and mechanical properties of the moulding.

The method and device according to the invention are elucidated hereinbelow with reference to the accompanying figures, in which:
Fig. 1 is a schematic perspective view of a device according to the invention;
Fig. 2 shows the operation of the device in cross-section;
Fig. 3 is a schematic view of another embodiment of the invention.

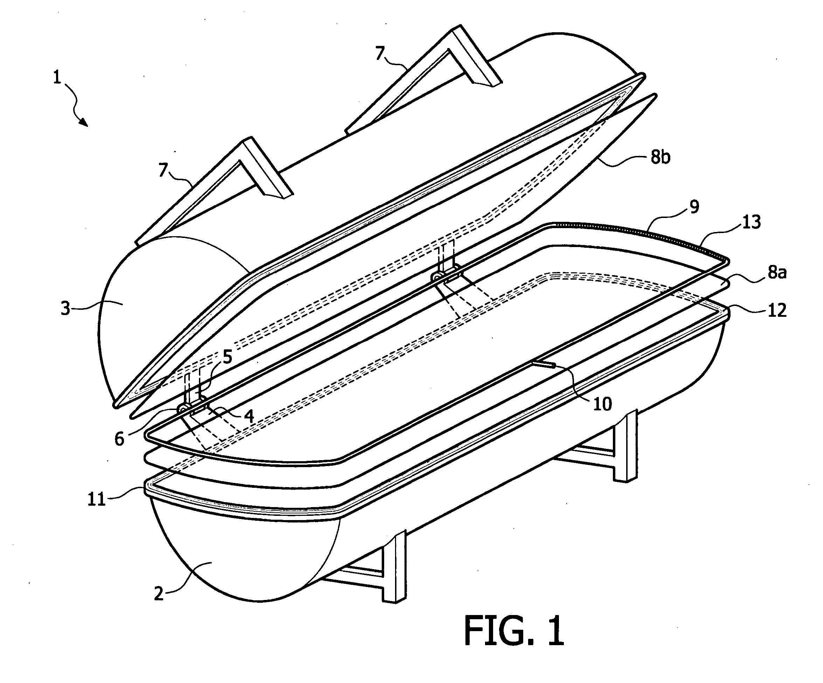

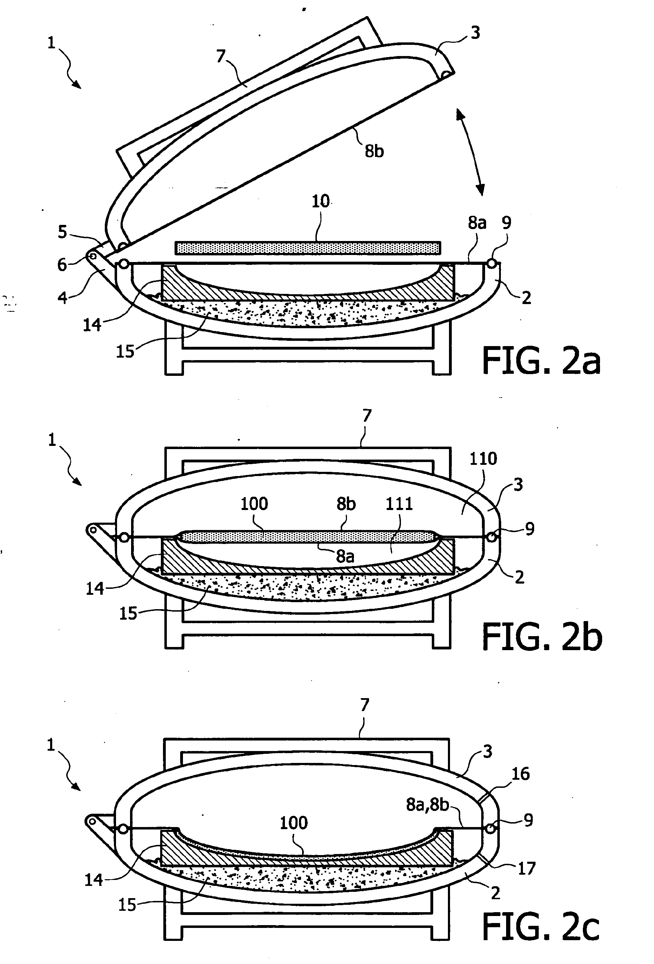

Referring to figure 1, a device according to the invention comprises a pressure vessel or autoclave 1 consisting of a lower half 2 and an upper half 3 which serves as cover. Pressure vessel 1 is further provided with a durable closing mechanism (not shown). The pressure vessel can in principle be made suitable for any internal pressure. Pressure vessel 1 is preferably able to withstand the typical pressures usual in the manufacture of mouldings from fibre-reinforced plastics, for instance an internal pressure of a minimum of 10 bar. The lower half 2 and upper half 3 are mutually connected and displaceable relative to each other, for instance by support beams 4 and 5 which are connected to each other by means of hinge 6. Handles 7 are provided on cover 3 so that the pressure vessel can be opened and closed easily. Pressure vessel 1 is further provided in this embodiment with two heatable elastic membranes 8a, 8b between which the laminate to be formed can be placed. Membranes 8a, 8b preferably comprise, as has already been described at length above, a rubber and/or elastomer sheet into which a stretchable heating element is incorporated. The stretchability (elasticity) of the heatable membrane 8a and/or 8b is preferably higher than 100%, more preferably higher than 200% and most preferably higher than 400%. This allows the manufacture of mouldings with complicated shapes. The heating element in membranes 8a, 8b preferably has a greater stretchability than the rubber and/or elastomer material in which it is incorporated. Breakage in or breakage of specific parts of the heating circuit are hereby prevented. Both membranes 8a, 8b can be provided with a frame which, if desired, can be connected in mutually "pivoting" manner to the pressure vessel, for instance on the support beam construction 4, 5. The membrane frame can here form a part of the closing mechanism of pressure vessel 1. It is also possible to accommodate the first membrane 8a and the second membrane 8b in respectively the lower part 2 and the cover 3 of pressure vessel 1, for instance on a peripheral stop edge arranged for this purpose on the inner side of both pressure vessel parts. Pressure vessel 1 or the frame for the membranes is further provided with an peripheral conduit 9 with which vacuum can be applied between the two membranes 8a, 8b. Peripheral conduit 9 is connected for this purpose to a vacuum pump (not shown) via connecting part 10. The peripheral conduit can for instance be arranged in peripheral edge 11 of the lower part 2 of pressure vessel 1. Peripheral edge 11 can be provided for this purpose with a recess 12 in which peripheral conduit 9 can be accommodated. The laminate for deforming (the stack) is situated during use of the device within peripheral conduit 9. Peripheral conduit 9 is provided with small openings 13 on the inner side thereof which are connected to the space between the two membranes 8a, 8b when they are placed onto each other (when pressure vessel 1 is closed). After and/or during closing of cover 3 the air between the two membranes 8a, 8b can be suctioned away via openings 13, whereby an at least partial vacuum is created here. In order to heat membranes 8a, 8b the device is also provided with electrical heating means (not shown) which are connected in suitable manner to the heatable membranes 8a, 8b via connecting means for electrical current. If desired, either the upper membrane 8b or only the lower membrane 8a can be provided with a heating circuit or be connected to the electrical heating means. Pressure vessel 1, for instance the lower side 2 thereof, is further provided with a mould 14 (see figure 2). For strengthening purposes the mould is preferably placed on a supporting layer 15, for instance of sand, hydrophilic grains or any other supporting material with which a reaction force can be produced. The space between the supporting grains must preferably be porous to enable removal and/or allow escape of the air between the mould and the membrane. The pressure vessel can further be provided with at least one safety valve 16 in lower part 2 or cover 3, and a valve 17 for discharging the overpressure (air) when membrane 8a, 8b is pressed over mould 14 during use. In a preferred embodiment the upper cover 3 can be further provided with one or more view windows to allow visual monitoring of the process. The pressure vessel can further be provided with one or more fans which can provide for a good distribution of the heat during the heating cycle. It is also possible to arrange in the pressure vessel one or more infrared sensors or other temperature measuring sensors so that the temperature of the stack can be measured during the method, in addition to the temperature of the heating and the membrane (or the membranes) themselves. It is also advantageous to provide the pressure vessel with a suitable heat insulation which is preferably also reflective on the inside.

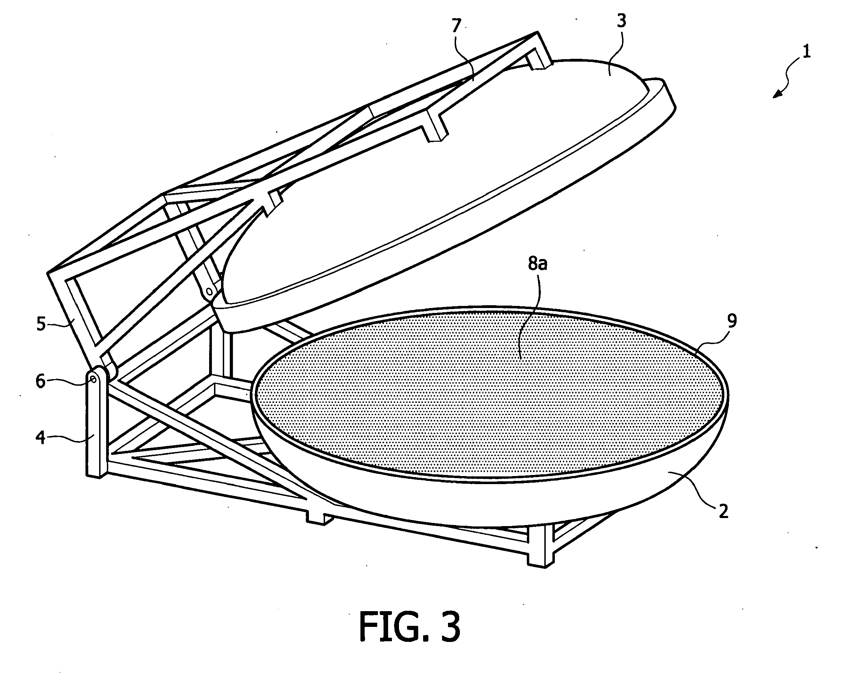

During operation and referring to figure 2, a stack 100 of several fibre-reinforced thermoplastic polymer layers (the stack) is placed on the lower elastic membrane 8b. If desired, for instance in the case of mouldings where the shape is not particularly critical, a plurality of membrane and moulding layers can also be stacked simultaneously. Cover 3 is then closed and locked onto lower part 2, wherein laminate 100 is received between membrane 8b and membrane 8a in cover 3. After closure the pair of membranes 8a, 8b is connected to an electrical heating device (not shown) and heated by sending a current through the heating circuit in the membranes. The stack is herein heated to the desired first temperature, preferably just above the melting or softening temperature of the relevant thermoplastic, whereby deformation and mutual adhesion of the layers of the laminate, optionally together with multiple layers, becomes possible. It is also possible to heat only the lower membrane 8b and only then cover the stack with upper membrane 8a. The skilled person will appreciate that numerous variations are possible here. As shown in figure 2b, the stack is situated here between membranes 8a and 8b, wherein the whole is brought substantially to the first temperature. The temperature of pressure vessel 1, and of the enclosed air 110, is preferably low here, for instance room temperature. Via peripheral conduit 13 the assembly of laminate 100 and membranes 8a, 8b is then placed under vacuum, wherein the two membranes are moved toward each other and laminate 100 is compressed. Applying vacuum can in principle take place before, during or after heating of the membranes. It is for instance possible to heat the stack only after a sufficient vacuum has been created. If desired, the pressure in vessel 1 can be increased on both sides of stack 100 during the heating cycle by blowing air into the interior space 110 of pressure vessel 1. This provides for additional compression of the laminate, so enhancing the consolidation thereof. Deforming of the stack subsequently takes place by discharging the air 111 present between the pair of membranes 8a, 8b and mould 14 by means of a valve 17. Stack 100 will hereby be moved downward and drape over/in the mould, whereby it takes on the form of the mould as shown in figure 2c. The deforming process can be accelerated and/or enhanced with a vacuum between the lower membrane and the mould (cavity) or even the whole lower vessel half. The pressure on the other side (110) can optionally be increased further during the deforming. Because the forming mould is colder than the recrystallization or solidifying temperature of the thermoplastic polymer, the thermoplastic/stack will rapidly cool into the desired shape, whereby the production cycle is in fact completed. It will be apparent that the pressure vessel can take any desired form. Another embodiment of the device with a pressure vessel of differing form is shown for instance in figure 3.

As will have become apparent from the above description, the device according to the invention has many advantages. Further advantages relate to the relatively low purchase cost of the device compared to a known autoclave. This latter must after all be wholly heatable and able to withstand high pressures. The device according to the invention does not have this drawback. Short production cycles can further be achieved with the device according to the invention since it is provided with a rapid-action opening and closing mechanism, which makes short intervals between cycles possible, and since due to the use of the heatable membranes only the stack is heated and it is not therefore necessary to heat the further mass of the device. Integral manufacture of the moulding is further possible, and displacements of the stack from a heating unit to the shaping tool are no longer necessary. The device according to the invention does indeed have the additional advantage that heating and shaping can take place from one position in the same machine setup.

The device also provides extra possibilities due to its simplicity. It is thus possible for instance to heat the stack under pressure (both vacuum pressure and external positive air pressure are possible). A particular advantage is obtained when so-called self-reinforced plastics as already described above are applied, because the device enables further additional stretching of the stack during the heating and deforming before it is cooled against the mould.

An additional advantage of the device according to the method is that the mould which defines the shape of the moulding can be embodied relatively simply. It is thus not necessary for instance to provide the mould with a smooth or highly polished mould surface, because the surface quality of the moulding is determined mainly by the membrane. Any desired surface quality can be readily adjusted by a suitable choice of this membrane.

The mouldings obtained with the method according to the invention can be used as lightweight construction element in industrial applications, such as for instance in constructions, buildings, vehicles, ships and so forth. A great advantage of the method and device according to the invention is that such mouldings can be manufactured in a simple and efficient manner, wherein the moulding displays good mechanical properties.

## Claims

1. Method for manufacturing a moulding from a plastic, preferably a fibre-reinforced plastic, which method comprises at least the steps of
a. stacking at least one plastic layer to form a laminate;
b. arranging the laminate between at least two membranes, at least one of which comprises **integrated heating;**
c. bringing the thus formed assembly to a first temperature by heating the at least one membrane **with the integrated heating;**
d. forming the assembly by making use of a shaping tool brought to a second temperature.

2. Method as claimed in claim 1, **characterized in that** a vacuum pressure is applied after enclosing the laminate between the at least two membranes.

3. Method as claimed in claim 1 or 2, **characterized in that** an overpressure is applied to the outside of the assembly.

4. Method as claimed in any of the foregoing claims, **characterized in that** the at least two membranes are each received in a clamping frame, wherein the clamping frames are pivotable about a common side, and that enclosing of the stack takes place by placing thereof between the clamping frames and moving the clamping frames pivotally onto each other.

5. Method as claimed in any of the foregoing claims, **characterized in that** the shaping tool comprises a mould and that the assembly heated to the first temperature is held under pressure for a suitable time against the mould surface.

6. Method as claimed in claim 4, **characterized in that** the shaping tool also comprises an autoclave in which the mould is accommodated, and that the assembly is held under pressure against the mould surface by at least partially discharging the air situated between the assembly and the mould surface.

7. Method as claimed in any of the foregoing claims, **characterized in that** at least one of the plastic layers comprises a fibre-reinforced thermoplastic polymer.

8. Method as claimed in claim 7, **characterized in that** the first temperature is higher than the glass transition temperature of the thermoplastic polymer or higher than the lowest glass transition temperature in the case a plurality of thermoplastic polymers are applied.

9. Method as claimed in claim 7 or 8, **characterized in that** the first temperature is higher than the melting temperature of the thermoplastic polymer or higher than the lowest melting temperature in the case a plurality of thermoplastic polymers are applied.

10. Method as claimed in any of the claims 7-9, **characterized in that** the second temperature is lower than the glass transition temperature of the thermoplastic polymer or lower than the lowest glass transition temperature in the case a plurality of thermoplastic polymers are applied.

11. Method as claimed in any of the foregoing claims, **characterized in that** at least one of the plastic layers comprises a fibre-reinforced thermosetting polymer.

12. Method as claimed in claim 11, **characterized in that** the first temperature is higher than the curing temperature of the thermosetting polymer or higher than the lowest curing temperature in the case a plurality of thermosetting polymers are applied.

13. Method as claimed in either of the claims 11-12, **characterized in that** the second temperature is lower than the glass transition temperature of the thermosetting polymer or lower than the lowest glass transition temperature in the case a plurality of thermosetting polymers are applied.

14. Device for manufacturing a moulding from a plastic, preferably a fibre-reinforced plastic, which device comprises at least
a) enclosing means for enclosing a laminate of at least one plastic layer between at least two membranes;
b) first heating means comprising heating elements arranged in at least one membrane for bringing the at least one membrane to a first temperature;
c) a shaping tool for deforming the laminate;
d) pressure means enabling the assembly of laminate and at least two membranes to be held under pressure.

15. Device as claimed in claim 14, **characterized in that** it is also provided with means for applying a vacuum pressure between the at least two membranes.

16. Device as claimed in any of the claims 14-15, **characterized in that** it is also provided with second heating means for bringing the shaping tool to a second temperature.

17. Device as claimed in any of the claims 14-16, **characterized in that** it is also provided with an assembly of clamping frames between which membranes are received, wherein the clamping frames are pivotable about a common side.

18. Device as claimed in any of the claims 14-17, **characterized in that** the pressure means comprise an autoclave in which air can be supplied so as to increase the pressure, wherein the autoclave is also provided with at least one valve to allow air to escape from the autoclave.

## Patentansprüche

1. Verfahren zur Herstellung eines Formteils aus einem Kunststoff, vorzugsweise einem faserverstärkten Kunststoff, wobei das genannte Verfahren mindestens die folgenden Schritte umfasst:
a. Auftragung mindestens einer Kunststoffschicht, um einen Schichtstoff zu bilden
b. Anordnung des Schichtstoffs zwischen mindestens zwei Membranen, von denen mindestens eine mit einer **integrierten Heizung** ausgestattet ist;
c. Aufheizung der auf diese Weise gebildeten Baugruppe auf eine erste Temperatur, indem die genannte mindestens eine Membran **mit einer integrierten Heizung** erhitzt wird;
d. Formen der Baugruppe mit Hilfe eines Formwerkzeugs, das auf eine zweite Temperatur aufgeheizt wird.

2. Verfahren gemäß Anspruch 1, **dadurch gekennzeichnet, dass** ein Vakuumdruck angelegt wird, nachdem der Schichtstoff von den mindestens zwei Membranen abgedeckt wurde.

3. Verfahren gemäß Anspruch 1 oder 2, **dadurch gekennzeichnet, dass** außerhalb der Baugruppe ein Überdruck angelegt wird.

4. Verfahren gemäß jedem der obigen Ansprüche, **dadurch gekennzeichnet, dass** die genannten mindestens zwei Membranen je in einem Spannrahmen eingespannt sind, wobei die Spannrahmen um eine gemeinsame Seite drehbar gelagert sind, sowie **dadurch gekennzeichnet, dass** die Abdeckung der Auftragungsanordnung **dadurch** stattfindet, dass die Auftragung zwischen die Spannrahmen gebracht wird und daraufhin die Spannrahmen zueinander hingedreht werden.

5. Verfahren gemäß jedem der obigen Ansprüche, **dadurch gekennzeichnet, dass** das Formwerkzeug ein Formteil umfasst und dass die auf die erste Temperatur aufgeheizte Baugruppe während einer geeigneten Dauer gegen die Fläche des Formteils gedrückt gehalten wird.

6. Verfahren gemäß Anspruch 4, **dadurch gekennzeichnet, dass** das Formwerkzeug außerdem einen Autoklav umfasst, in dem das Formteil untergebracht ist, und dass die Baugruppe gegen die Fläche des Formteils gedrückt gehalten wird, indem die zwischen der Baugruppe und der Fläche des Formteils befindliche Luft zumindest teilweise abgelassen wird.

7. Verfahren gemäß jedem der obigen Ansprüche, **dadurch gekennzeichnet, dass** mindestens eine der Kunststoffschichten ein faserverstärktes thermoplastisches Polymer umfasst.

8. Verfahren gemäß Anspruch 7, **dadurch gekennzeichnet, dass** die erste Temperatur höher ist als die Glasübergangstemperatur des thermoplastischen Polymers oder, wenn mehrere thermoplastische Polymere aufgetragen werden, höher ist als die niedrigste Glasübergangstemperatur des thermoplastischen Polymers.

9. Verfahren gemäß Anspruch 7 oder 8, **dadurch gekennzeichnet, dass** die erste Temperatur höher ist als die Schmelztemperatur des thermoplastischen Polymers oder, wenn mehrere thermoplastische Polymere aufgetragen werden, höher ist als die niedrigste Schmelztemperatur des thermoplastischen Polymers.

10. Verfahren gemäß jedem der Ansprüche 7-9, **dadurch gekennzeichnet, dass** die zweite Temperatur niedriger ist als die Glasübergangstemperatur des thermoplastischen Polymers oder, wenn mehrere thermoplastische Polymere aufgetragen werden, niedriger ist als die niedrigste Glasübergangstemperatur des thermoplastischen Polymers.

11. Verfahren gemäß jedem der obigen Ansprüche, **dadurch gekennzeichnet, dass** mindestens eine der Kunststoffschichten ein faserverstärktes duroplastisches Polymer umfasst.

12. Verfahren gemäß Anspruch 11, **dadurch gekennzeichnet, dass** die erste Temperatur höher ist als die Aushärtetemperatur des duroplastischen Polymers oder, wenn mehrere duroplastische Polymere aufgetragen werden, höher ist als die niedrigste Aushärtetemperatur des duroplastischen Polymers.

13. Verfahren gemäß jedem der Ansprüche 11-12, **dadurch gekennzeichnet, dass** die zweite Temperatur niedriger ist als die Glasübergangstemperatur des duroplastischen Polymers oder, wenn mehrere duroplastische Polymere aufgetragen werden, niedriger ist als die niedrigste Glasübergangstemperatur des duroplastischen Polymers.

14. Gerät zur Herstellung eines Formteils aus einem Kunststoff, vorzugsweise einem faserverstärkten Kunststoff, wobei das genannte Gerät mindestens Folgendes umfasst:
a. Abdeckmittel zum Abdecken eines mindestens aus einer Kunststoffschicht bestehenden Schichtstoffs zwischen mindestens zwei Membranen;
b. Erstes Heizmittel, das Heizelemente umfasst, die in mindestens einer Membran untergebracht sind und diese mindestens eine Membran auf eine erste Temperatur aufheizen;
c. Ein Formwerkzeug zum Verformen des Schichtstoffs;
d. Druckmittel, das es ermöglicht, den Schichtstoff und die mindestens zwei Membranen unter Druck zu halten.

15. Gerät gemäß Anspruch 14, **dadurch gekennzeichnet, dass** es außerdem mit einem Mittel zur Anwendung eines Vakuumdrucks zwischen den mindestens zwei Membranen versehen ist.

16. Gerät gemäß jedem der Ansprüche 14-15, **dadurch gekennzeichnet, dass** es außerdem mit einem zweiten Heizmittel versehen ist, welches das Formwerkzeug auf eine zweite Temperatur erhitzen kann.

17. Gerät gemäß jedem der Ansprüche 14-16, **dadurch gekennzeichnet, dass** es außerdem mit einer Gruppe von Spannrahmen versehen ist, zwischen denen die Membranen eingespannt sind, wobei die Spannrahmen um eine gemeinsame Seite drehbar gelagert sind.

18. Gerät gemäß jedem der Ansprüche 14-17, **dadurch gekennzeichnet, dass** das Druckmittel außerdem einen Autoklav umfasst, in dem Luft bereitgestellt werden kann, um den Druck zu erhöhen, wobei der Autoklav außerdem mit mindestens einem Ventil zum Ablassen von Luft aus dem Autoklav ausgestattet ist.

## Revendications

1. Procédé pour fabriquer un moulage en plastique, de préférence en plastique renforcé par fibres, lequel procédé comprend au moins les étapes consistant :
a. à empiler au moins une couche de plastique pour former un stratifié ;
b. à agencer le stratifié entre au moins deux membranes dont au moins une comprend un **chauffage intégré ;**
c. à porter l'ensemble ainsi formé à une première température en chauffant la au moins une membrane **avec le chauffage intégré ;**
d. à former l'ensemble en utilisant un outil de modelage porté à une seconde température.

2. Procédé selon la revendication 1, **caractérisé en ce qu'**une dépression est appliquée après avoir enveloppé le stratifié entre les au moins deux membranes.

3. Procédé selon la revendication 1 ou 2, **caractérisé en ce qu'**une surpression est appliquée sur l'extérieur de l'ensemble.

4. Procédé selon l'une quelconque des revendications précédentes, **caractérisé en ce que** les au moins deux membranes sont reçues chacune dans un cadre de serrage, étant entendu que les cadres de serrage peuvent pivoter autour d'un côté commun, et **en ce que** l'enveloppement de l'empilement se fait en le plaçant entre les cadres de serrage et en amenant les cadres de serrage par pivotement l'un sur l'autre.

5. Procédé selon l'une quelconque des revendications précédentes, **caractérisé en ce que** l'outil de modelage comprend un moule et **en ce que** l'ensemble chauffé à la première température est maintenu sous pression pendant un temps approprié contre la surface du moule.

6. Procédé selon la revendication 4, **caractérisé en ce que** l'outil de modelage comprend aussi un autoclave dans lequel le moule est logé et **en ce que** l'ensemble est maintenu sous pression contre la surface du moule en évacuant au moins partiellement l'air situé entre l'ensemble et la surface du moule.

7. Procédé selon l'une quelconque des revendications précédentes, **caractérisé en ce qu'**au moins l'une des couches de plastique est constituée d'un polymère thermoplastique renforcé par fibres.

8. Procédé selon la revendication 7, **caractérisé en ce que** la première température est supérieure à la température de transition vitreuse du polymère thermoplastique ou supérieure à la température de transition vitreuse la plus basse dans le cas où l'on applique une pluralité de polymères thermoplastiques.

9. Procédé selon la revendication 7 ou 8, **caractérisé en ce que** la première température est supérieure à la température de fusion du polymère thermoplastique ou supérieure à la température de fusion la plus basse dans le cas où l'on applique une pluralité de polymères thermoplastiques.

10. Procédé selon l'une quelconque des revendications 7-9, **caractérisé en ce que** la seconde température est inférieure à la température de transition vitreuse du polymère thermoplastique ou inférieure à la température de transition vitreuse la plus basse dans le cas où l'on applique une pluralité de polymères thermoplastiques.

11. Procédé selon l'une quelconque des revendications précédentes, **caractérisé en ce qu'**au moins l'une des couches de plastique est constituée d'un polymère thermodurcissable renforcé par fibres.

12. Procédé selon la revendication 11, **caractérisé en ce que** la première température est supérieure à la température de durcissement du polymère thermodurcissable ou supérieure à la température de durcissement la plus basse dans le cas où l'on applique une pluralité de polymères thermodurcissables.

13. Procédé selon l'une ou l'autre des revendications 11-12, **caractérisé en ce que** la seconde température est inférieure à la température de transition vitreuse du polymère thermodurcissable ou inférieure à la température de transition vitreuse la plus basse dans le cas où l'on applique une pluralité de polymères thermodurcissables.

14. Dispositif pour fabriquer un moulage en plastique, de préférence en plastique renforcé par fibres, lequel dispositif comprend au moins :
a) des moyens d'enveloppement pour envelopper un stratifié d'au moins une couche de plastique entre au moins deux membranes ;
b) un premier moyen de chauffage comprenant des éléments chauffants agencés dans au moins une membrane pour porter la au moins une membrane à une première température ;
c) un outil de modelage pour déformer le stratifié ;
d) un moyen à pression permettant de maintenir sous pression l'ensemble formé du stratifié et d'au moins deux membranes.

15. Dispositif selon la revendication 14, **caractérisé en ce qu'**il est aussi pourvu de moyens pour appliquer une dépression entre les au moins deux membranes.

16. Dispositif selon l'une quelconque des revendications 14-15, **caractérisé en ce qu'**il est aussi pourvu d'un second moyen de chauffage pour porter l'outil de modelage à une seconde température.

17. Dispositif selon l'une quelconque des revendications 14-16, **caractérisé en ce qu'**il est aussi pourvu d'un ensemble de cadres de serrage entre lesquels les membranes sont reçues, étant entendu que les cadres de serrage peuvent pivoter autour d'un côté commun.

18. Dispositif selon l'une quelconque des revendications 14-17, **caractérisé en ce que** les moyens à pression sont constitués d'un autoclave dans lequel de l'air peut être amené de manière à accroître la pression, étant entendu que l'autoclave est aussi pourvu d'au moins une soupape pour permettre à l'air de s'échapper de l'autoclave.
